(19) Europäisches Patentamt / European Patent Office / Office européen des brevets

(11) **EP 4 160 124 A1**

(12) **EUROPEAN PATENT APPLICATION**
published in accordance with Art. 153(4) EPC

(43) Date of publication:
**05.04.2023 Bulletin 2023/14**

(21) Application number: **21791596.6**

(22) Date of filing: **27.05.2021**

(51) International Patent Classification (IPC):
**F25D 23/10** *(2006.01)*

(52) Cooperative Patent Classification (CPC):
**F25D 23/10**

(86) International application number:
**PCT/CN2021/096413**

(87) International publication number:
**WO 2021/213544 (28.10.2021 Gazette 2021/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.05.2020 CN 202010475574**

(71) Applicants:
• **Qingdao Haier Refrigerator Co., Ltd**
  **Qingdao, Shandong 266101 (CN)**

• **Haier Smart Home Co., Ltd.**
  **Qingdao, Shandong 266101 (CN)**

(72) Inventors:
• **SUN, Xingkai**
  **Qingdao, Shandong 266101 (CN)**
• **GAO, Hongbo**
  **Qingdao, Shandong 266101 (CN)**
• **KONG, Linglei**
  **Qingdao, Shandong 266101 (CN)**

(74) Representative: **Lavoix**
  **Bayerstraße 83**
  **80335 München (DE)**

(54) **METHOD AND DEVICE FOR MEASURING GAS CONCENTRATION BY REFRIGERATOR, AND REFRIGERATOR**

(57)    The present invention discloses a method and device for detecting a gas concentration by a refrigerator, and the refrigerator. The method comprises: acquiring a gas leakage amount St and a volume V of a kitchen, and detecting an opening angle $\alpha1$ of a kitchen door and an opening angle $\alpha2$ of a kitchen window; calculating a gas concentration Ct based on the V, $\alpha1$, $\alpha2$ and St; and activating, if the gas concentration Ct exceeds a minimum warning value, a gas emergency shut-off device to cut off a gas main switch, and activating a ventilation device of the kitchen. Compared with the prior art, the method of the present invention calculates the gas concentration in the kitchen by detecting the gas leakage amount, the size of the kitchen space, the opening angle of the kitchen door and the opening angle of the kitchen window, which allows to take different measures based on different gas concentrations.

```
                                                      ┌─ S100
┌──────────────────────────────────────────────┐
│ Acquiring a gas leakage amount St and a volume V of a kitchen, │
│ and detecting an opening angle α1 of a kitchen door and an     │
│ opening angle α2 of a kitchen window                           │
└──────────────────────────────────────────────┘
                       │
                       ▼                              ┌─ S200
┌──────────────────────────────────────────────┐
│ Calculating a gas concentration Ct based on the V, α1, α2 and St │
└──────────────────────────────────────────────┘
                       │
                       ▼                              ┌─ S300
┌──────────────────────────────────────────────┐
│ Activating, if the gas concentration Ct exceeds a minimum       │
│ warning value, a gas emergency shut-off device to cut off a gas │
│ main switch, and activating a ventilation device of the kitchen │
└──────────────────────────────────────────────┘
```

**FIG. 1**

EP 4 160 124 A1

## Description

## TECHNICAL FIELD

The present invention relates to a method and device for detecting a gas concentration by a refrigerator, and the refrigerator.

## BACKGROUND

As one of the most common types of household accidents, gas leakage still occurs frequently even though a kitchen is usually ventilated and a gas device is regularly checked, and is generally accompanied by accidents such as poisoning, fires, and explosions.

Although an irritating gas is doped into the gas to alert people of gas leakage, it is still difficult to detect the gas leakage when the leakage is below a certain level or when no one is home, which may cause irreparable damages.

## SUMMARY

Objects of the present invention are to provide a method and device for detecting a gas concentration by a refrigerator, and the refrigerator.

In order to achieve one of the aforesaid objects, an embodiment of the present invention provides a method for detecting a gas concentration by a refrigerator, comprising:

acquiring a gas leakage amount St and a volume V of a kitchen, and detecting an opening angle $\alpha1$ of a kitchen door and an opening angle $\alpha2$ of a kitchen window;

calculating a gas concentration Ct based on the V, $\alpha1$, $\alpha2$ and St; and

activating, if the gas concentration Ct exceeds a minimum warning value, a gas emergency shut-off device to cut off a gas main switch, and activating a ventilation device of the kitchen.

As a further improvement of an embodiment of the present invention, the "acquiring the gas leakage amount St" specifically comprises:

acquiring a pipeline internal pressure P and a pipeline abnormal opening parameter $\gamma$ via a sensor provided in a gas pipeline, and calculating the gas leakage amount St:

$$S_t = \frac{e^{P+\gamma(t-1)^2} - 1}{1 + kt^2}$$

wherein the parameter k is a gas adiabatic index.

As a further improvement of an embodiment of the present invention, the "calculating the gas concentration Ct based on the V, $\alpha1$, $\alpha2$ and St" specifically comprises:

acquiring the gas concentration Ct of the kitchen via the V, $\alpha1$, $\alpha2$ and St according to a gas concentration calculating formula, wherein the gas concentration calculating formula is:

$$Ct=St/V-(a1*\alpha1 + a2*\alpha2)*t-d$$

wherein the a1, a2 and d are all constants.

As a further improvement of an embodiment of the present invention, the method further comprises: calculating, when the gas concentration exceeds a minimum warning value, users to be alerted preferentially based on relevant information of a plurality of users and different weights of different relevant information, and sending a gas concentration exceedance alert to the users to be alerted preferentially.

As a further improvement of an embodiment of the present invention, the method further comprises: calculating, if the gas concentration of the user is detected to continue rising after activating the gas emergency shut-off device, users to be alerted preferentially based on the relevant information of a plurality of users and different weights of different relevant information, and sending an alarm to the users to be alerted preferentially.

As a further improvement of an embodiment of the present invention, the "calculating the users to be alerted preferentially based on relevant information of the plurality of users and the different weights of different relevant information" specifically comprises:

calculating a total weight of each user based on the relevant information of each user, wherein the relevant information comprises the user's age, role, physical fitness and distance from the kitchen; and taking users ranked at top N in the total weight as the users to be alerted preferentially.

As a further improvement of an embodiment of the present invention, the "calculating the total weight of each user based on the relevant information of each user" specifically comprises:

acquiring each user's actual age *a,* role *r,* physical fitness *b* and distance *l* from the kitchen; selecting a corresponding age weight Wa based on the age *a,* wherein if *a* is less than and equal to 30, the larger the *a,* the larger the weight Wa; otherwise, the smaller the *a,* the smaller the Wa; selecting different role weights Wr based on the different roles *r,* wherein the role weights are ranked from largest to smallest as father, mother, child, housekeeper or nanny, security guard or property management;

selecting different physical fitness weights Wb based on the different physical fitness *b*, wherein the physical fitness weights are ranked from largest to smallest as fit, normal, thin, diseased, disabled; and

selecting a corresponding distance weight Wl based on the distance *l* from the kitchen, wherein the larger the *l*, the smaller the Wl;

wherein the total weight W of each user is equal to a sum of the corresponding age weight Wa, role weight Wr, physical fitness weight Wb and distance weight Wl of each user, that is, W=Wa+Wr+Wb+Wl.

As a further improvement of an embodiment of the present invention, the "acquiring each user's actual age *a*, role *r*, physical fitness *b* and distance *l* from the kitchen" specifically comprises:

calculating, via an age pre-inputted for each user, the age *a* for each user based on input time and present time;

acquiring the user's actual role *r* and physical fitness *b* via a role and physical fitness pre-inputted for each user; and

acquiring the distance *l* between the user and the kitchen via a pre-bound positioning terminal.

In order to achieve one of the aforesaid objects, an embodiment of the present invention provides an electronic device, which comprises a memory and a processor, the memory stores a computer program operatable on the processor, and the processor, while executing the computer program, may implement the steps in the aforesaid method for detecting the gas concentration by the refrigerator.

In order to achieve one of the aforesaid objects, an embodiment of the present invention provides a refrigerator, wherein the refrigerator comprises the aforesaid electronic device.

Compared with the prior art, in the method for detecting the gas concentration by the refrigerator according to the present invention, the gas concentration in the kitchen is calculated by detecting the gas leakage amount, the size of the kitchen space, the opening angle of the kitchen door and the opening angle of the kitchen window, which allows to take different measures based on different gas concentrations.

## BRIEF DESCRIPTION OF THE DRAWINGS

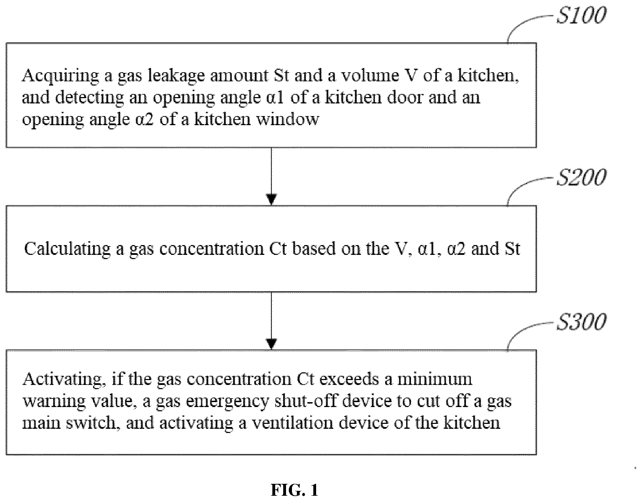

FIG. 1 is a schematic flowchart of a method for detecting a gas concentration by a refrigerator according to the present invention.

## DETAILED DESCRIPTION

The present invention will be described hereinafter in detail with reference to the specific embodiments shown in the drawings. However, these embodiments are not intended to limit the present invention, and the structures, methods, or functional changes made by those of ordinary skill in the art according to the embodiments are all included in the protection scope of the present invention.

As shown in FIG. 1, the present invention provides a method for detecting a gas concentration by a refrigerator, according to the method, after a gas leakage is detected, a gas concentration in a kitchen is calculated by detecting a gas leakage amount, a size of a kitchen space, an opening angle of a kitchen door and an opening angle of a kitchen window, such that different measures can be taken based on different gas concentrations. It shall be noted that whether the gas leakage occurs can be determined by detecting whether there is an abnormal opening in a gas pipeline. The method comprises:

acquiring a gas leakage amount St and a volume V of a kitchen, and detecting an opening angle $\alpha1$ of a kitchen door and an opening angle $\alpha2$ of a kitchen window; and

calculating a gas concentration Ct based on the V, $\alpha1$, $\alpha2$ and St.

In S100, the gas leakage amount St and the volume V of the kitchen is acquired, and the opening angle $\alpha1$ of the kitchen door and the opening angle $\alpha2$ of the kitchen window is detected.

A sensor for data interaction with the refrigerator is provided in the gas pipeline, and may acquire an internal pressure P in the gas pipeline and a pipeline abnormal opening parameter $\gamma$. The pipeline abnormal opening parameter $\gamma$ may represent a degree parameter regarding perforation, cracking, penetration and the like of the pipeline. Then, the gas leakage amount St may be calculated based on a gas amount calculating formula as follows:

$$S_t = \frac{e^{P+\gamma(t-1)^2} - 1}{1 + kt^2}$$

where the parameter k is a gas adiabatic index, and may be approximate to a constant under ideal conditions.

It should be noted that the parameter $\gamma$ may be adopted to determine whether the gas leakage occurs or not, and the gas leakage amount is calculated when $\gamma$ is found not to be 0, wherein the t refers to a time interval from the start of the gas leakage.

The volume V of the kitchen is calculated from a length, width and height of the kitchen as pre-inputted by the user.

The kitchen door and window are provided with an opening angle sensor respectively, and the refrigerator may perform data interaction with the opening angle sensors to acquire the opening angle $\alpha1$ of the kitchen door and the opening angle $\alpha2$ of the window.

In S200, the gas concentration Ct is calculated based on the V, $\alpha1$, $\alpha2$ and St.

Specifically, the initial gas concentration Ct1 (Ct1=St/V) may be acquired from the gas leakage amount and the volume of the kitchen. Then, the opening angle of the kitchen door and the opening angle of the window have a linear effect on the gas concentration. That is, the overall gas concentration Ct satisfies Ct=Ct1-(a1*$\alpha1$*t+d1)-(a2*$\alpha2$*t+d2)=Ct1-(a1*$\alpha1$+a2*$\alpha2$)*t-d, where the a1, a2, d1, d2 and d are all constants, d=d1+d2, and the *t* refers to the time interval from the start of the gas leakage. Therefore, the gas concentration calculating formula is:

$$Ct = St/V-(a1*\alpha1 + a2*\alpha2)*t-d.$$

In S300, if the gas concentration exceeds a minimum warning value, a gas emergency shut-off device is activated to cut off a gas main switch, and a ventilation device of the kitchen is activated.

In a preferred embodiment, the method further comprises:

In S400, when the gas concentration exceeds a minimum warning value, users to be alerted preferentially are calculated based on relevant information of a plurality of users and different weights of different relevant information, and the gas concentration exceedance alert is sent to the users to be alerted preferentially.

Specifically, the "calculating the users to be alerted preferentially, and sending the gas concentration exceedance alert to the users to be alerted preferentially" specifically comprises the following steps.

In S410, a total weight of each user is calculated based on the relevant information of each user, where the relevant information comprises the user's age, role, physical fitness and a distance from the kitchen.

Further, the "calculating the total weight of each user based on the relevant information of each user" specifically comprises:

acquiring each user's actual age *a,* role *r*, physical fitness *b* and a distance *l* from the kitchen; and
selecting a corresponding age weight Wa based on the age *a,* wherein if *a* is less than and equal to 30, the larger the *a,* the larger the weight Wa; otherwise, the smaller the *a,* the smaller the Wa. It is also possible to configure a weight for each age group and select a corresponding age weight based on the age group in which a specific age falls.

Different role weights Wr are selected based on the different roles *r*, where the role weights are ranked from largest to smallest as father, mother, child, housekeeper or nanny, security guard or property management.

Different physical fitness weights Wb are selected based on the different physical fitness *b*, where the physical fitness weights are ranked from largest to smallest as fit, normal, thin, diseased, disabled; and

A corresponding distance weight Wl is selected based on the distance *l* from the kitchen, where the larger the *l*, the smaller the Wl. It is also possible to segment the distance *l*, configure a weight for each segment, and select the corresponding distance weight based on a distance segment into which a specific distance 1 falls.

The total weight W of each user is equal to a sum of the corresponding age weight Wa, role weight Wr, physical fitness weight Wb and distance weight Wl of each user, that is, W=Wa+Wr+Wb+Wl.

Furthermore, the "acquiring each user's actual age *a,* role *r*, physical fitness *b* and distance *l* from the kitchen" specifically comprises:

calculating, via an age pre-inputted for each user, the age *a* of each user based on input time and present time;
acquiring the user's actual role *r* and physical fitness *b* via a role and physical fitness pre-inputted for each user; and
acquiring the distance *l* between the user and the kitchen via a pre-bound positioning terminal.

In S420, users ranked at top N in the total weight are taken as the users to be alerted preferentially.

The users ranked at top N in the total weight may be selected as the users to be alerted preferentially, wherein N is a positive integer.

A gas concentration exceedance alert may then be sent to the users to be alerted preferentially, and the users are notified that the gas main switch has been turned off to prevent the gas concentration from further rising and causing irreparable damages.

Since the gas main switch may fail to be turned off, in order to remind the user to take measures carefully, the method further comprises:

calculating, if the gas concentration of the user is detected to continue rising after activating the gas emergency shut-off device, users to be alerted preferentially based on relevant information of a plurality of users and different weights of different relevant information, and sending an alarm to the users to be alerted preferentially.

In a specific embodiment, the refrigerator, via the data interaction with a sensor provided in the gas pipeline, enables the sensor to acquire the internal pressure P in the gas pipeline and the pipeline abnormal opening parameter $\gamma$. When the occurrence of cracks in the gas pipeline (i.e., $\gamma$ is not 0) or the abnormality in the pressure P is detected, it is determined that the gas leakage occurs, and the gas leakage amount St over time is acquired based on the P and $\gamma$ via the gas amount calculating formula. Then, the space size V of the kitchen is acquired based on pre-inputted kitchen dimensions, and the opening angle $\alpha1$ of the kitchen door and the opening angle $\alpha2$ of the kitchen window are also acquired based on the angle sensors provided on the kitchen door and the kitchen window. At last, the gas concentration Ct is calculated based on the V, α1, α2, and St, the gas emergency shut-off device is activated if the gas concentration Ct exceeds the minimum warning value to cut off the gas main switch, and the ventilation device of the kitchen is activated. In addition, the users to be alerted preferentially are calculated, and provided with a gas amount exceedance alert and an alert that the gas main switch has been turned off. It should be noted that, if it is detected that the gas concentration continues rising after activating the gas emergency shut-off device, it is also necessary to send an alarm to the users to be alerted preferentially to notify that the gas main switch has failed to be turned off and that the gas continues leaking.

The present invention further provides an electronic device, which comprises a memory and a processor. The memory stores a computer program operable on the processor. The processor is provided with a control module for data interaction with sensors in a gas pipeline. The control module is further configured to perform data interaction with an opening angle sensor of a kitchen door and an opening angle sensor of a kitchen window, and also configured to receive data inputted by a user. The processor, while executing the program, may implement any one step in the method for detecting the gas concentration by the refrigerator as described above. That is, the processor implements the steps in any technical solution of the method for detecting the gas concentration by the refrigerator as described above.

The present invention further provides a refrigerator that comprises the aforesaid electronic device.

It should be understood that although the present invention is described in terms of embodiments in this description, not every embodiment includes only one independent technical solution. The statement mode of the description is merely for clarity, and those skilled in the art should regard the description as a whole. The technical solutions in various embodiments may also be combined properly to develop other embodiments that can be understood by those skilled in the art.

The series of detailed illustrations listed above are merely for specifically illustrating the feasible embodiments of the present invention, but not intended to limit the protection scope of the present invention. Any equivalent embodiments or variations made without departing from the technical spirit of the present invention shall fall within the protection scope of the present invention.

**Claims**

1. A method for detecting a gas concentration by a refrigerator, comprising:

   acquiring a gas leakage amount St and a volume V of a kitchen, and detecting an opening angle α1 of a kitchen door and an opening angle α2 of a kitchen window;

   calculating a gas concentration Ct based on the V, α1, α2 and St; and
   activating, if the gas concentration Ct exceeds a minimum warning value, a gas emergency shut-off device to cut off a gas main switch, and activating a ventilation device of the kitchen.

2. The method for detecting the gas concentration by the refrigerator according to claim 1, wherein the "acquiring the gas leakage amount St" specifically comprises:

   acquiring an internal pressure P in a gas pipeline and a pipeline abnormal opening parameter γ via a sensor provided in the gas pipeline, and calculating the gas leakage amount St:

   $$S_t = \frac{e^{P+\gamma(t-1)^2} - 1}{1 + kt^2}$$

   wherein the parameter k is a gas adiabatic index.

3. The method for detecting the gas concentration by the refrigerator according to claim 1, wherein the "calculating the gas concentration Ct based on the V, α1, α2 and St" specifically comprises:

   acquiring the gas concentration Ct of the kitchen via the V, α1, α2 and St according to a gas concentration calculating formula, wherein the gas concentration calculating formula is:

   $$Ct = St/V - (a1*\alpha1 + a2*\alpha2)*t - d$$

   wherein the a1, a2 and d are all constants.

4. The method for detecting the gas concentration by the refrigerator according to claim 1, further comprising:
   calculating, when the gas concentration exceeds a minimum warning value, users to be alerted preferentially based on relevant information of a plurality of users and different weights of different relevant information, and sending a gas concentration exceedance alert to the users to be alerted preferentially.

5. The method for detecting the gas concentration by the refrigerator according to claim 1, further comprising:
   calculating, if the gas concentration of the user is detected to continue rising after activating the gas emergency shut-off device, users to be alerted preferentially based on relevant information of a plurality of users and different weights of different relevant information, and sending an alarm to the users to be alerted preferentially.

6. The method for detecting the gas concentration by the refrigerator according to claim 4, wherein the "calculating the users to be alerted preferentially based on relevant information of the plurality of users and different weights of different relevant information" specifically comprises:

calculating a total weight of each user based on the relevant information of each user, wherein the relevant information comprises the user's age, role, physical fitness and a distance from the kitchen; and
taking users ranked at top N in the total weight as the users to be alerted preferentially.

7. The method for detecting the gas concentration by the refrigerator according to claim 6, wherein the "calculating the total weight of each user based on the relevant information of each user" specifically comprises:

acquiring each user's actual age $a$, role $r$, physical fitness $b$ and distance $l$ from the kitchen;
selecting a corresponding age weight Wa based on the age $a$, wherein if $a$ is less than and equal to 30, the larger the $a$, the larger the weight Wa; otherwise, the smaller the $a$, the smaller the Wa;
selecting different role weights Wr based on the different roles r, wherein the role weights are ranked from largest to smallest as father, mother, child, housekeeper or nanny, security guard or property management;
selecting different physical fitness weights Wb based on the different physical fitness b, wherein the physical fitness weights are ranked from largest to smallest as fit, normal, thin, diseased, disabled; and
selecting a corresponding distance weight Wl based on the distance $l$ from the kitchen, wherein the larger the $l$, the smaller the Wl;
wherein the total weight W of each user is equal to a sum of the corresponding age weight Wa, role weight Wr, physical fitness weight Wb and distance weight Wl of each user, that is, W=Wa+Wr+Wb+Wl.

8. The method for detecting the gas concentration by the refrigerator according to claim 7, wherein the "acquiring each user's actual age $a$, role $r$, physical fitness $b$ and distance $l$ from the kitchen" specifically comprises:

calculating, via an age pre-inputted for each user, the age $a$ of each user based on input time and present time;
acquiring the user's actual role $r$ and physical fitness $b$ via a role and a physical fitness pre-inputted for each user; and
acquiring the distance $l$ between the user and the kitchen via a pre-bound positioning terminal.

9. An electronic device, comprising a memory and a processor, wherein the memory stores a computer program operatable on the processor, and the processor executes the computer program for implementing the steps in the method for detecting the gas concentration by the refrigerator according to any one of claims 1 to 8.

10. A refrigerator, comprising the electronic device according to claim 9.

S100

Acquiring a gas leakage amount St and a volume V of a kitchen, and detecting an opening angle α1 of a kitchen door and an opening angle α2 of a kitchen window

S200

Calculating a gas concentration Ct based on the V, α1, α2 and St

S300

Activating, if the gas concentration Ct exceeds a minimum warning value, a gas emergency shut-off device to cut off a gas main switch, and activating a ventilation device of the kitchen

**FIG. 1**

### INTERNATIONAL SEARCH REPORT

| International application No. |
| --- |
| **PCT/CN2021/096413** |

| A. | CLASSIFICATION OF SUBJECT MATTER |
| --- | --- |

F25D 23/10(2006.01)i

According to International Patent Classification (IPC) or to both national classification and IPC

| B. | FIELDS SEARCHED |
| --- | --- |

Minimum documentation searched (classification system followed by classification symbols)

F25D23/10; G01M3/04; F25D23/00; F25D29/00; F25D11/00; F25D13/00; F25D31/00; G12B1/00

Documentation searched other than minimum documentation to the extent that such documents are included in the fields searched

Electronic data base consulted during the international search (name of data base and, where practicable, search terms used)

CNABS, CNTXT, CNKI, VEN: 冰箱, 煤气, 天然气, 泄漏, 检测, 浓度, 检测, 门, 窗, 角度, 开度; REFRIGERATOR, GAS, SENSOR, WARN, LEAKAGE, LIMIT, CONCENTRATION, DENSITY, ANGLE, DETECT, MONITOR, DIVERGENCE, APERTURE, OPENING

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 2692603 Y (GUANGDONG KELON ELECTRICAL HOLDINGS CO., LTD.) 13 April 2005 (2005-04-13)<br>   description, pages 3-5, and figures 1-3 | 1-10 |
| A | CN 202432822 U (QINGDAO HISENSE ELECTRIC CO., LTD.) 12 September 2012 (2012-09-12)<br>   entire document | 1-10 |
| A | CN 110930654 A (ZHUZHOU ENN GAS CO., LTD.) 27 March 2020 (2020-03-27)<br>   entire document | 1-10 |
| A | CN 110244572 A (ZHUHAI GREE INTELLIGENT EQUIPMENT CO., LTD. et al.) 17 September 2019 (2019-09-17)<br>   entire document | 1-10 |
| A | CN 106124130 A (SHANXI ZHONGKE HUAYEE TECHNOLOGY CO., LTD.) 16 November 2016 (2016-11-16)<br>   entire document | 1-10 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **07 August 2021** | **26 August 2021** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/096413** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 107688299 A (SHANDONG BOFA INTELLIGENT TECHNOLOGY CO., LTD.) 13 February 2018 (2018-02-13)<br>    entire document | 1-10 |
| A | JP 2010243104 A (PANASONIC CORP.) 28 October 2010 (2010-10-28)<br>    entire document | 1-10 |

Form PCT/ISA/210 (second sheet) (January 2015)

**INTERNATIONAL SEARCH REPORT**
Information on patent family members

International application No.

**PCT/CN2021/096413**

| Patent document cited in search report | | | Publication date (day/month/year) | Patent family member(s) | | | Publication date (day/month/year) |
|---|---|---|---|---|---|---|---|
| CN | 2692603 | Y | 13 April 2005 | None | | | |
| CN | 202432822 | U | 12 September 2012 | None | | | |
| CN | 110930654 | A | 27 March 2020 | None | | | |
| CN | 110244572 | A | 17 September 2019 | WO | 2020253162 | A1 | 24 December 2020 |
| CN | 106124130 | A | 16 November 2016 | CN | 106124130 | B | 23 November 2018 |
| CN | 107688299 | A | 13 February 2018 | None | | | |
| JP | 2010243104 | A | 28 October 2010 | None | | | |

Form PCT/ISA/210 (patent family annex) (January 2015)